(19) **Europäisches Patentamt / European Patent Office / Office européen des brevets**

(11) **EP 1 711 986 B1**

(12) **FASCICULE DE BREVET EUROPEEN**

(45) Date de publication et mention
de la délivrance du brevet:
**04.05.2011 Bulletin 2011/18**

(21) Numéro de dépôt: **05717686.9**

(22) Date de dépôt: **25.01.2005**

(51) Int Cl.:
**H01S 3/098** [(2006.01)]    **H01S 3/081** [(2006.01)]

(86) Numéro de dépôt international:
**PCT/FR2005/050044**

(87) Numéro de publication internationale:
**WO 2005/076421 (18.08.2005 Gazette 2005/33)**

(54) **SOURCE LASER ULTRABREVE A IONS TERRE RARE A TRAIN D'IMPULSIONS STABLE ET DISPOSITIF D'ALLONGEMENT D'UNE CAVITE LASER**

ULTRAKURZE LASERQUELLE MIT SELTENERDIONEN UND STABILER IMPULSFOLGE UND EINRICHTUNG ZUR VERLÄNGERUNG EINES LASERRESONATORS

ULTRA-SHORT LASER SOURCE WITH RARE EARTH IONS AND STABLE PULSE TRAIN AND DEVICE FOR LENGTHENING A LASER CAVITY

(84) Etats contractants désignés:
**AT BE BG CH CY CZ DE DK EE ES FI FR GB GR HU IE IS IT LI LT LU MC NL PL PT RO SE SI SK TR**

(30) Priorité: **26.01.2004 FR 0450135**

(43) Date de publication de la demande:
**18.10.2006 Bulletin 2006/42**

(73) Titulaires:
• **Amplitude Systèmes**
  **33600 Pessac (FR)**
• **CENTRE NATIONAL DE LA RECHERCHE SCIENTIFIQUE (CNRS)**
  **75794 Paris Cedex 16 (FR)**
• **UNIVERSITE DE BORDEAUX I**
  **33400 Talence Cedex (FR)**

(72) Inventeurs:
• **HONNINGER, Clemens**
  **F-33610 CESTAS (FR)**
• **COURJAUD, Antoine**
  **F-33850 LEOGNAN (FR)**
• **MOTTAY, Eric**
  **F-33130 BEGLES (FR)**
• **SALIN, François**
  **F-33170 GRADIGNAN (FR)**

(74) Mandataire: **Michelet, Alain et al**
**Cabinet HARLE et PHELIP**
**14-16, rue Ballu**
**75009 Paris (FR)**

(56) Documents cités:
**WO-A-02/21643**

• **KOLEV V Z ET AL: "Passive mode locking of a Nd:YVO4 laser with an extra-long optical resonator" OPTICS LETTERS OPT. SOC. AMERICA USA, vol. 28, no. 14, 15 juillet 2003 (2003-07-15), pages 1275-1277, XP002327811 ISSN: 0146-9592**
• **PRASANKUMAR R P ET AL: "An extended cavity femtosecond Cr:LiSAF laser pumped by low cost diode lasers" OPTICS EXPRESS OPT. SOC. AMERICA USA, vol. 11, no. 11, 2 juin 2003 (2003-06-02), XP002295331 ISSN: 1094-4087**
• **AUS DER AU J ET AL: "Femtosecond microjoule pulses with 15.8 W average power from a passively mode-locked diode-pumped Yb:YAG thin-disk laser" CONFERENCE ON LASERS AND ELECTRO-OPTICS (CLEO 2000). TECHNICAL DIGEST, vol. 39, 7 mai 2000 (2000-05-07), pages 82-83, XP002295327 ISBN: 1-55752-634-6**
• **PAPADOPOULOS D N ET AL: "Passively mode-locked diode-pumped Nd:YVO4 oscillator operating at an ultralow repetition rate" OPTICS LETTERS, vol. 28, no. 19, 1 octobre 2003 (2003-10-01), pages 1838-1840, XP002295328 ISSN: 0146-9592**
• **SPÜHLER G J ET AL: "Passively mode-locked high-power Nd:YAG lasers with multiple laser heads" APPLIED PHYSICS B (LASERS AND OPTICS) SPRINGER-VERLAG GERMANY, vol. B71, no. 1, juillet 2000 (2000-07), pages 19-25, XP002295329 ISSN: 0946-2171**

**(Cont. page suivante)**

- BRUNNER F ET AL: "WIDELY TUNABLE PULSE DURATIONS FROM A PASSIVELY MODE-LOCKED THIN-DISK YB:YAG LASER" OPTICS LETTERS, OPTICAL SOCIETY OF AMERICA, WASHINGTON, US, vol. 26, no. 6, 15 mars 2001 (2001-03-15), pages 379-381, XP001020252 ISSN: 0146-9592
- HOENNINGER C ET AL: "Q-SWITCHING STABILITY LIMITS OF CONTINUOUS-WAVE PASSIVE MODE LOCKING" JOURNAL OF THE OPTICAL SOCIETY OF AMERICA - B, OPTICAL SOCIETY OF AMERICA, WASHINGTON, US, vol. 16, no. 1, janvier 1999 (1999-01), pages 46-56, XP000996813 ISSN: 0740-3224
- KELLER U ET AL: "SEMICONDUCTOR SATURABLE ABSORBER MIRRORS(SESAM'S) FOR FEMTOSECOND TO NANOSECOND PULSE GENERATION IN SOLID-STATE LASERS" IEEE JOURNAL OF SELECTED TOPICS IN QUANTUM ELECTRONICS, IEEE SERVICE CENTER, US, vol. 2, no. 3, 1 septembre 1996 (1996-09-01), pages 435-451, XP000689812 ISSN: 1077-260X
- SENNAROGLU ALPHAN ET AL: "Design criteria for Herriott-type multi-pass cavities for ultrashort pulse lasers" OPT. EXPRESS; OPTICS EXPRESS MAY 2003, vol. 11, no. 9, mai 2003 (2003-05), pages 1106-1113, XP002280035
- KLOPP P ET AL: "Passively mode-locked Yb: KYW laser pumped by a tapered diode laser" OPT. EXPRESS; OPTICS EXPRESS JANUARY 2002, vol. 10, no. 2, janvier 2002 (2002-01), pages 108-113, XP002295330
- AU AUS DER J ET AL: "16.2-W AVERAGE POWER FROM A DIODE-PUMPED FEMTOSECOND BY: YAG THIN DISK LASER" OPTICS LETTERS, OPTICAL SOCIETY OF AMERICA, WASHINGTON, US, vol. 25, no. 11, 20 juin 2000 (2000-06-20), pages 859-861, XP000951881 ISSN: 0146-9592
- COURJAUD A ET AL: "1.5 W femtosecond diode-pumped Yb:KGW laser" ADVANCED SOLID-STATE LASERS CONFERENCE, OPTICAL SOCIETY OF AMERICA, 31 décembre 2001 (2001-12-31), pages 161-163, XP009036009

**Description**

La présente invention concerne une source laser ultrabrève à ions terre rare à train d'impulsions stable.

Depuis la réalisation par Ippen et Shank en 1974 [Appl. Phys. Letters; 24, (1974) 373] du premier laser émettant des impulsions plus courtes que la picoseconde (1 ps = $10^{-12}$s), la durée des impulsions laser n'a cessé de raccourcir. Les lasers qui génèrent des impulsions dont la durée est inférieure à la picoseconde sont dénommés "Lasers ultrabrefs". Ils suscitent un vaste engouement et d'intenses efforts de recherche dans la communauté scientifique parce que les impulsions ultrabrèves qu'ils génèrent permettent l'étude temporelle de la dynamique de processus ultrarapides (inférieur à $10^{-10}$s) jusqu'alors inaccessibles à la plupart des détecteurs. Avec ces sources de lumière ultrabrève, de nouveaux champs d'investigations et d'applications s'ouvrent comme dans les processus de fragmentation et/ou désorption de molécules adsorbées multiphotoniques, la métrologie, les études non destructives de mécanismes chimiques dans les cellules biologiques, etc.

On connaît des lasers générant des impulsions ultrabrèves faisant intervenir des milieux amplificateurs à ions terre rare (Ytterbium (Yb), Néodyme (Nd),..). Ces lasers présentent l'avantage de pouvoir être pompés directement par un laser semi-conducteur, ce qui en fait des lasers compacts, fiables et peu onéreux. En particulier, les milieux amplificateurs dopés à l'ion Ytterbium peuvent être pompés par des diodes lasers de puissance car l'ion Ytterbium présente une bande d'absorption dans le proche infrarouge. L'accord entre la longueur d'onde d'émission de la diode laser de puissance avec une raie d'absorption du milieu amplificateur dopé à l'ion Ytterbium permet une excellente efficacité de couplage. De plus, la longueur d'onde d'émission de la diode laser de puissance est proche de la longueur d'onde d'émission laser qui est typiquement comprise entre 1020 et 1070 nm. Il en résulte un excellent rendement quantique et une faible déperdition de chaleur dans le milieu amplificateur.

Un problème majeur, cependant, dans la génération stable d'impulsions ultrabrèves pour les lasers réside dans la détermination de paramètres permettant d'obtenir un blocage de modes sans Q-switching ("Mode déclenché" - QS). Le blocage de modes contribue en effet à l'obtention d'impulsions ultrabrèves tandis que le mode déclenché se caractérise par l'apparition d'instabilités dans le train d'impulsions ultrabrèves émis par le laser ultrabref. Ces instabilités peuvent se traduire par de fortes modulations dans le train d'impulsions. Ces instabilités sont notamment prononcées pour des lasers ultrabrefs utilisant des milieux amplificateurs à faibles sections efficaces d'émission dont les milieux amplificateurs dopés à l'ion Ytterbium font partie. Une stratégie pour éviter ces instabilités qui sont caractéristiques d'un régime déclenché, consiste à choisir des paramètres pour le laser, notamment des diamètres du mode laser dans le milieu amplificateur, ... permettant d'éliminer ces instabilités tout en permettant le blocage de modes. Cette stratégie conduit donc à éviter la mise en oeuvre de configurations lasers dans lesquelles la fenêtre d'obtention d'un blocage de modes stable est trop courte ou n'existe pas. Or, éviter ces configurations est problématique pour des milieux amplificateurs à ions terre rare présentant un temps de relaxation du niveau supérieur important ou une faible section efficace d'émission.

A cet effet le mode déclenché rend donc difficilement utilisables les lasers ultrabrefs utilisant des milieux amplificateurs à ions terre rare dans des applications nécessitant un comportement fiable et stable dans le temps.

Jusqu'à présent aucun moyen n'a été proposé, permettant d'assurer une stabilité satisfaisante

Ainsi, le document Prasankumar et al. (Optics Express, 2 June 2003, Vol 11, N°11, p.1265-1269), décrit un laser Cr:LiSAF utilisant une cavité multipassage pour réduire le taux de répétition du laser.

Le document Kolev et al (Optics Lett., vol.28, N°14, 15 July 2003, p. 1275-1277) décrit un laser Nd :YVO4 comprenant une cavité résonante de grande longueur.

Le document WO02/21643 décrit une cavité laser pour source laser picoseconde, utilisant comme milieu amplificateur un disque mince de Yb :YAG. La cavité laser comprend un oscillateur optique paramétrique (OPO) permettant de convertir une longueur d'onde laser primaire en trois longueurs d'onde de sortie différentes.

Le document Papadopoulos et al. (Optics Lett., vol. 28, N° 19, 1 Octobre 2003, p. 1838-1840) décrit un laser Nd:YVO$_4$ à blocage de modes passif utilisant une cavité multi-passage pour réduire le taux de répétition du laser.

L'objectif de la présente invention est de proposer une source laser ultrabrève à ions terre rare simple dans sa conception et dans son mode opératoire, compacte, peu onéreuse et permettant d'obtenir un train continu d'impulsions ultrabrèves stable avec une énergie par impulsion très haute, i.e. supérieure typiquement à 100 nJ.

A cet effet, l'invention concerne une source laser ultrabrève à ions terre rare comportant d'une part une cavité résonante ayant une première face de sortie partiellement réfléchissante et une deuxième face réfléchissante, et d'autre part un premier matériau actif, placé à l'intérieur de la cavité résonante, ayant une fluence de saturation supérieure à 3 J/cm$^2$ et recevant un flux lumineux de pompe, ledit flux étant émis par une première source de pompe laser solide, ladite source émettant des impulsions lumineuses ayant une énergie $E_L$.

Selon l'invention,

- la cavité résonante présente une longueur de chemin optique parcourue par lesdites impulsions supérieure à 7,5 m de sorte que l'énergie $E_L$ par impulsion soit supérieure à 100 nJ, ledit chemin optique comprenant au moins un passage dans ledit matériau actif,

- la source laser ultrabrève comprend des moyens pour allonger la cavité résonante permettant d'étendre la longueur du chemin optique parcouru par lesdites impulsions lumineuses dans la cavité résonante d'une source laser compacte, la matrice ABCD de propagation de la cavité résonante étant proche de la matrice unitaire de sorte que les caractéristiques du faisceau lumineux effectuant des allers-retours dans la cavité résonante sont inchangées, les moyens pour allonger la cavité comprennent au moins un dispositif d'allongement de la cavité comportant à une première extrémité un premier miroir plan et à l'autre extrémité un deuxième miroir plan, lesdits premier et deuxième miroirs plans étant placés respectivement aux foyers respectifs d'un premier et deuxième miroirs sphériques concaves, - ledit premier miroir d'entrée plan étant placé en avant et espacé du premier miroir sphérique permet l'injection et l'éjection des impulsions lumineuses dans le dispositif d'allongement de la cavité, ledit deuxième miroir plan ayant un axe normal à sa surface incliné verticalement d'un angle (90° -θ/n) par rapport à un plan parallèle au plan contenant le premier miroir plan de sorte qu'une impulsion lumineuse entrant dans ledit dispositif sous un angle d'incidence θ dans un plan vertical et sous un angle Φ dans un plan horizontal par rapport à la normale à la surface du premier miroir plan subisse 2*n réflexions sur le deuxième miroir sphérique avant de sortir dudit dispositif.

On entend ici par "source laser ultrabrève", une source laser émettant des impulsions lumineuses ayant une durée inférieure à 10 picosecondes et encore mieux, inférieure à une picoseconde.

Dans différents modes de réalisation possibles, la présente invention concerne également les caractéristiques qui ressortiront au cours de la description qui va suivre et qui devront être considérées isolément ou selon toutes leurs combinaisons techniquement possibles :

- la longueur de chemin optique est comprise entre 7,5 m et 300 m,
- la source laser comprend au moins un deuxième matériau actif placé à l'intérieur de la cavité résonante, ledit deuxième matériau actif recevant un flux lumineux de pompe,
- ledit flux lumineux de pompe est émis par une deuxième source de pompe laser solide,
- le nombre de passage par allers-retours dans la cavité résonante dans chaque matériau actif est supérieur ou égal à 2,
- le nombre de passage par allers-retours dans la cavité résonante dans chaque matériau actif est égal à 4,
- la source laser ultrabrève comprend un miroir dichroïque placée entre ledit matériau actif et la source de pompe laser solide correspondante, ledit miroir recevant les impulsions lumineuses dudit matériau actif et réfléchissant lesdites impulsions lumineuses vers le matériau actif,
- la source de pompe laser solide est un laser semi-conducteur,
- le matériau actif comprend des ions ytterbium,
- le matériau actif comprend des ions néodyme.

L'invention concerne également un dispositif d'allongement d'une cavité laser.

Selon l'invention, ce dispositif comprend deux miroirs plans placés au foyer respectif de deux miroirs sphériques concaves, et la normale au deuxième miroir plan étant inclinée d'un angle (90°-θ/n) par rapport à un plan parallèle au plan contenant le premier miroir plan.

Cette disposition permet d'allonger la cavité tout en conservant les propriétés du faisceau.

L'invention sera décrite plus en détail en référence aux dessins annexés dans lesquels:

- la figure 1 est une représentation schématique d'une source laser ultrabrève, selon un premier mode de réalisation de l'invention ;
- la figure 2 est une représentation schématique et un dispositif d'allongement de la cavité selon un mode de réalisation particulier de l'invention ;
- la figure 3 est une représentation schématique d'une source laser ultrabrève, selon un deuxième mode de réalisation de l'invention ;
- la figure 4 est une représentation schématique d'une source laser ultrabrève, selon un troisième mode de réalisation de l'invention ;
- la figure 5 montre un spectre obtenu dans un premier mode de mise en oeuvre de l'invention ;
- la figure 6 montre l'auto-corrélation obtenue dans le mode de mise en oeuvre de la figure 5 ;

Le but de l'invention est d'éliminer les instabilités liées au régime déclenché dans des sources lasers ultrabrèves à ions terre rare au moyen d'une cavité résonante de grande longueur et/ou au moyen d'une configuration de la cavité résonante permettant plusieurs passages dans au moins un milieu amplificateur par aller-retour de cavité.

La source laser ultrabrève à ions terre rare de l'invention comporte une cavité résonante 1 ayant une première face de sortie 2 partiellement réfléchissante et une deuxième face réfléchissante 3. Entre ces deux faces 2,3 est défini un chemin optique parcouru par les impulsions lumineuses, ledit chemin optique comprenant au moins un passage dans un premier matériau actif 4 ayant une fluence de saturation supérieure à 3 J/cm$^2$, placé à l'intérieur de la cavité résonante 1. Dans un mode de réalisation préférentiel, la cavité résonante 1 comporte au moins un deuxième matériau actif 5 ayant une fluence de saturation supérieure à 3 J/cm$^2$. Chacun desdits matériaux 4,5 actifs peut être pompé par une source laser de pompe différente 6. Ces sources lasers de pompe 6 sont des lasers solides émettant un flux lumineux de pompe 7. Dans un mode de réalisation préféré, chaque source laser de pompe 6 est un laser semi-conducteur. La longueur d'onde $\lambda_D$ sur laquelle est centrée le flux lumineux de pompe 7 est typiquement comprise entre 800 nm et 1 µm. Les ions terre rare utilisés dans le matériau actif 4 sont choisis parmi un des matériaux suivants : Ytterbium (Yb), Néodyme (Nd) ou tout autre matériau équivalent.

La longueur de chemin optique parcourue par lesdites impulsions dans la cavité résonante 1 est supérieure à 7,5 m de sorte que l'énergie $E_L$ par impulsion soit supérieure à 100 nJ pour une puissance moyenne de 2 W.

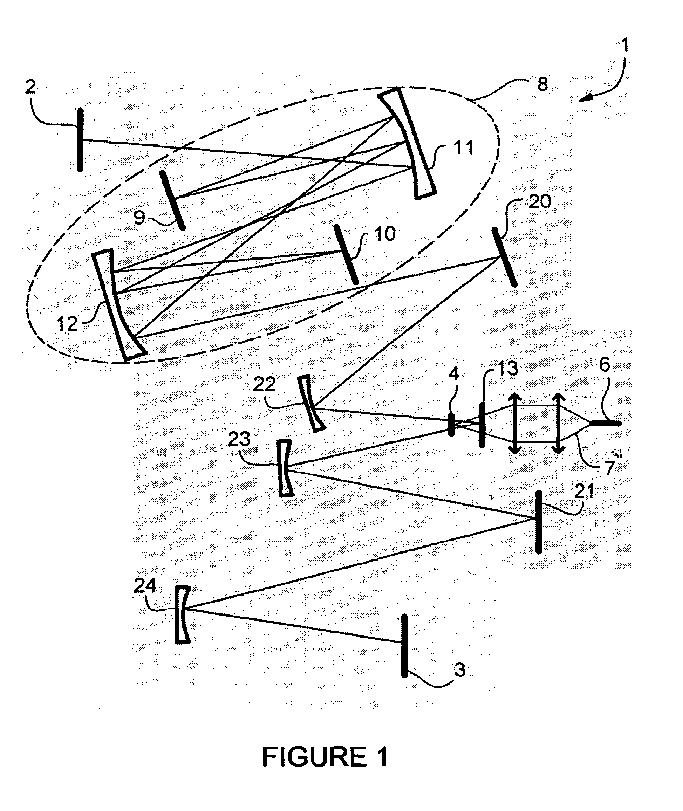

La Figure 1 montre une source laser ultrabrève à ions terre rare selon un premier mode de réalisation de l'invention. La distance séparant les première et deuxième faces 2, 3 est typiquement de l'ordre de quelques mètres, par exemple 3,33 m ce qui correspond à une cadence de 45 MHz en régime de modes bloqués. La cavité est repliée par les miroirs plans 20, 21 et par les miroirs concaves 22, 23, 24. Elle comprend également un seul matériau actif 4 ayant une fluence de saturation supérieure à 3 J/cm$^2$, par exemple un cristal Yb :KGW, ce matériau actif 4 étant placé à l'intérieur de la cavité résonante 1. Ce matériau actif 4 reçoit un flux lumineux de pompe 7 émis par une source de pompe laser solide 6 qui est préférentiellement un laser semi-conducteur. De manière à allonger la longueur de chemin optique parcouru par les impulsions dans la cavité résonante 1, cette cavité 1 comprend des moyens pour allonger la cavité résonante. L'allongement de la longueur de chemin optique est obtenu en faisant parcourir aux impulsions lumineuses de multiples passages laser à l'intérieur d'au moins un dispositif d'allongement de la cavité 8.

La matrice ABCD de propagation de la cavité résonante est proche de la matrice unitaire de sorte que les caractéristiques (divergence, dimension,...) du faisceau lumineux effectuant des allers-retours dans la cavité résonante 1 sont inchangées. Les paramètres géométriques de la cavité résonante comprenant les moyens d'allongement par rapport à une cavité plus courte sans moyens d'allongement sont identiques.

Les caractéristiques optiques d'un faisceau laser sont très différentes de celles des faisceaux lumineux conventionnels issus de sources naturelles ou artificielles (soleil, lampes,...). Les théories de l'optique géométrique s'avèrent insuffisantes pour décrire les transformations spatiales des faisceaux laser. La propagation des faisceaux lasers fait largement appel au phénomène de diffraction.

Ainsi, une matrice ABCD de propagation ou matrice de transfert de l'article « Laser Beams and Resonators » (H. Kogelnik and T. Li, Applied Optics, vol. 5 No. 10, octobre 1966) décrit la transformation subie par un rayon lumineux se propageant entre deux plans encadrant un système optique paraxial. Cette matrice agit sur les coordonnées d'un rayon issu du plan de départ. Elle concerne entre autre les faisceaux gaussiens.

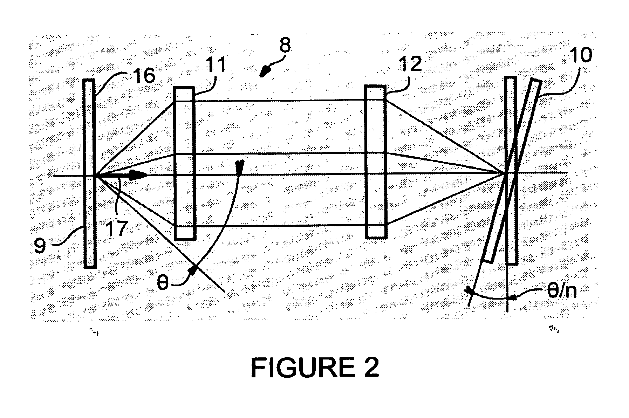

Les moyens pour allonger la cavité 8 comprennent ici un seul dispositif d'allongement de la cavité représenté sur la Figure 2 comportant à une première extrémité un premier miroir plan d'entrée 9 et à l'autre extrémité un deuxième miroir plan 10. Ces premier et deuxième miroirs plans 9, 10 sont placés respectivement au foyer respectif d'un premier et d'un deuxième miroirs courbes 11, 12. La séparation entre les miroirs courbes 11, 12 est équivalente à la somme de leur focale. Avantageusement, ces miroirs courbes 11, 12 sont des miroirs sphériques concaves. Pour réaliser plusieurs passages dans le dispositif d'allongement de la cavité 8, les impulsions lasers entrent dans le dispositif d'allongement 8 sous un angle d'incidence $\theta$ par rapport à la normale 16 à la surface 17 du premier miroir plan. En inclinant verticalement d'un angle $\theta/n$, le deuxième miroir plan 10 à l'autre extrémité du dispositif, les impulsions font n passages dans le plan vertical du dispositif 8 avant de ressortir par le même chemin. Pour séparer les impulsions lumineuses entrant dans le dispositif 8 et celles sortant du dispositif d'allongement de la cavité 8, les impulsions lumineuses n'entrent pas seulement dans le dispositif 8 sous un angle d'incidence $\theta$ par rapport à la normale à la surface du premier miroir plan 9, ledit angle étant contenu dans un plan vertical, mais aussi sous un angle $\Phi$ par rapport à cette normale, ledit angle $\Phi$ étant contenu dans un plan horizontal. L'injection et l'éjection des impulsions lumineuses se font alors par un miroir d'entrée, par exemple un miroir coupé en demi-lune, placé en avant et décalé vers le bas du premier miroir courbe du dispositif.

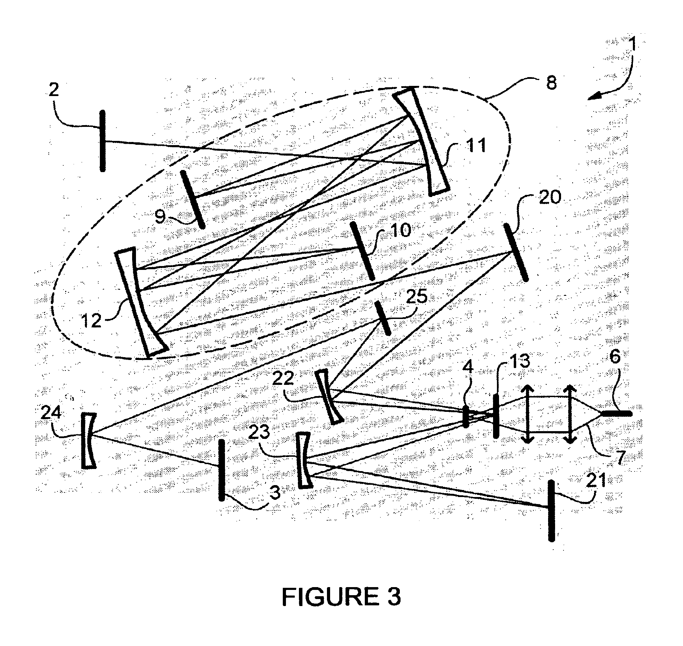

La Figure 3 montre une source laser ultrabrève à ions terre rare selon un deuxième mode de réalisation de l'invention. Les éléments de la Figure 2 ayant les mêmes références que les éléments décrits à la Figure 1 représentent les mêmes objets. Dans ce mode de réalisation particulier, en raison de l'orientation des miroirs 20 à 25 dans la cavité, les impulsions lumineuses effectuent plusieurs passages, ici 4, dans le matériau actif 4 par aller-retour dans la cavité résonante 1. Le fait de passer m fois dans le milieu à gain permet de multiplier le gain linéique par aller-retour dans la cavité résonante 1 par m, ce qui revient à changer l'amplification G du milieu en G$^m$, sans changer les pertes de la cavité, et permet, pour une énergie d'impulsion donnée, de plus saturer le gain laser. Ce multipassage dans le matériau actif 4 peut être associé à un allongement de la cavité résonante 1 obtenu en mettant en oeuvre les moyens pour allonger la cavité. La source laser ultrabrève comprend un miroir dichroïque 13 placée entre ledit matériau actif 4 et la source de pompe laser solide 6 correspondante, ledit miroir 13 recevant les impulsions lumineuses dudit matériau actif 4 et réfléchissant lesdites impulsions lumineuses vers le matériau actif.

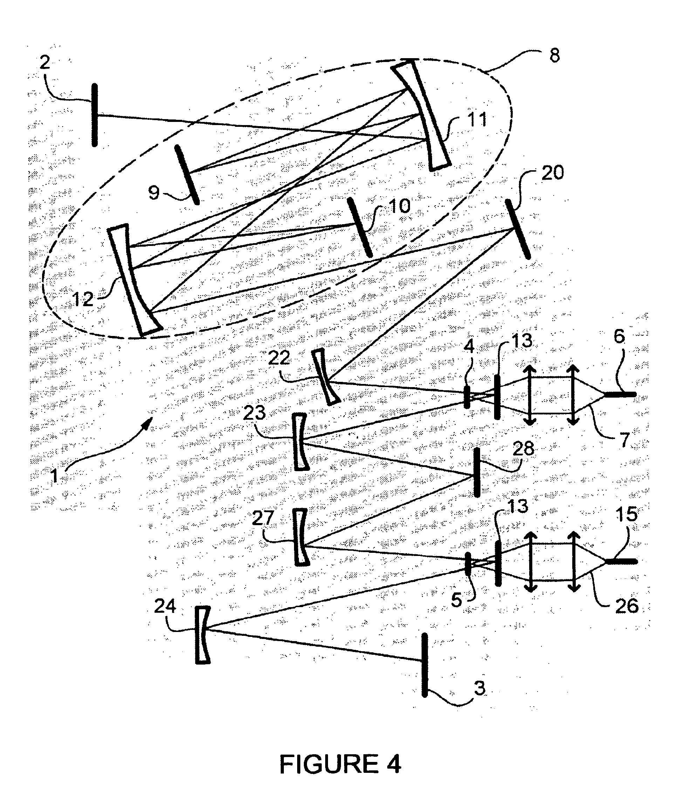

La Figure 4 montre une source laser ultrabrève à ions terre rare selon un troisième mode de réalisation de l'invention. Les éléments de la Figure 3 ayant les mêmes références que les éléments décrits à la Figure 2, représentent les mêmes objets. Dans ce mode de réalisation particulier, la source laser comprend au moins un deuxième matériau actif 5 placé à l'intérieur de la cavité résonante 1, les miroirs 22, 23, 24, 27, 28 replient le faisceau et ledit deuxième matériau actif 5 recevant un flux lumineux de pompe 26 émis par une deuxième source de pompe laser solide 15.

La cavité laser comprend la diode laser, l'optique de focalisation dans le milieu de gain, le milieu de gain (Yb: KGW), deux miroirs courbes pour focaliser le mode laser dans le milieu de gain, un troisième miroir courbe pour focaliser le mode laser sur un miroir non-linéaire, afin de démarrer et stabiliser le mode impulsionnel d'opération du laser. Dans cette configuration, les impulsions passent deux fois dans le milieu à gain par aller-retour dans la cavité résonante. Deux autres miroirs sont des miroirs plans de repli afin de rendre la cavité plus compacte.

Le dispositif d'allongement de la cavité comprend un miroir plan à l'entrée de la cavité multi-passage, deux miroirs plans situés aux foyers de deux miroirs courbes de rayon courbure 0,5 m qui sont séparé par une distance d'environ 1 m, un miroir plan à la sortie qui dirige le faisceau laser, vers le coupleur de sortie. En simple passage dans le dispositif d'allongement, les impulsions passent 6 fois sous les angles différents par rapport à l'axe optique du système, ce qui correspond à 12 passages par aller-retour dans la cavité laser.

La longueur totale de la cavité est 9,5 m, ce qui correspond à une cadence de 16,8 MHz.

L'invention ne saurait être limitée à la description qui précède et est susceptible de modifications avec l'évolution des technologies.

Une approche théorique a été développée pour expliquer la suppression des instabilités liées au régime déclenché dans des lasers ultrabrefs à ions terre rare (Ultrafast Ytterbium-Doped Bulk Lasers and Laser Amplifiers, Clemens Hoenninger, Hartung-Gorre Verlag, 1998, ISBN 3-89649-391-2).

La relation entre la puissance moyenne, l'énergie par impulsion et la puissance crête d'une source laser ultrabrève est donnée par:

$$P_{moyenne} = E_{impulsion} \times f_{rép} = P_{crête} \times \tau_{impulsion} \times f_{rép} \quad (1)$$

où $\tau_{impulsion}$ est la durée d'impulsion et $f_{rép}$ est la cadence de répétition avec $f_{rép} = \dfrac{c}{2 \times L_{cav}}$ (2), $L_{cav}$ étant la longueur du chemin optique parcouru par les impulsions dans la cavité résonante.

Si le dispositif de blocage de modes est un absorbant saturable lent ($t_{relax} > t_{pulse}$), qui se rétablit complètement pendant un aller-retour de cavité ($t_{relax} \ll 1/f_{rep}$), dont les paramètres de saturation sont principalement décrit par son énergie de saturation $E_{sat,A}$ et sa profondeur de modulation $\Delta R$, la condition de stabilité du train d'impulsion à modes bloqués est donnée par:

$$\left( \frac{g_{eff}}{g} - \frac{dg_{eff}}{dE_{pulse}} \right)_{\bar{E}_{pulse}} \cdot E^2_{pulse} > E_{sat,L} \cdot E_{sat,A} \cdot \Delta R \quad (3)$$

où $g_{eff}$ est le gain effectif stationnaire, prenant en compte les effets de filtrage spectral et $E_{sat,L}$ est l'énergie de saturation laser donnée par:

$$E_{sat,L} = \frac{h\nu}{m.\sigma^{(L)}_{em}} A_{eff,L} \quad (4)$$

où $\sigma_{em}$ est la section d'émission à la longueur d'onde laser, m est le nombre de passages dans le milieu laser par aller-retour de cavité, et $A_{eff,L}$ est la taille du mode laser dans le matériau actif.

D'après la relation (1) liant l'énergie par impulsion et la cadence de répétition, et d'après la condition de stabilité (3), il se déduit qu'une cavité résonante 1 de grande longueur ou une configuration multi-passage dans le matériau actif 4, 5 supprime les instabilités liées au fonctionnement en mode déclenché dans le train d'impulsions.

Ces deux moyens permettent de saturer suffisamment le gain laser durant un aller-retour de cavité. Une cavité résonante 1 présentant un chemin optique long permet de générer d'après les équations (1) et (2) des impulsions ultrabrèves de forte énergie. Une configuration multi-passage où m est le nombre de passage dans le matériau actif 4, 5 par aller-retour de cavité est équivalente à une cavité résonante simple où le gain serait saturé par une impulsion ayant m fois l'énergie de l'impulsion circulant dans la cavité résonante.

Ceci est particulièrement intéressant pour les lasers dopés Ytterbium, mais s'applique également à tous les matériaux de faible section efficace d'émission.

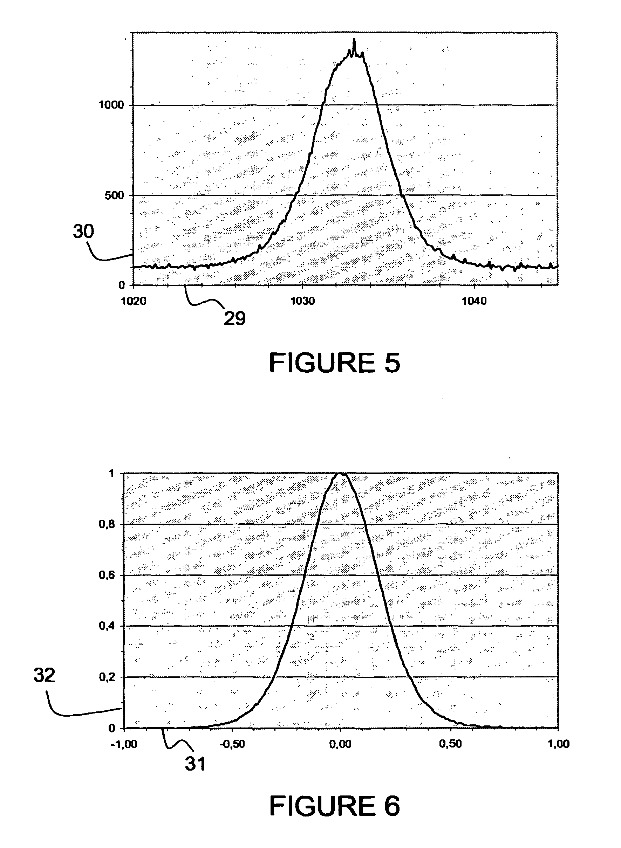

Les figures 5 et 6 précisent des résultats obtenus en mettant en oeuvre l'invention pour la réalisation d'un résonateur ayant une cavité optique longue et fonctionnant en régime à modes bloqués. Un dispositif d'allongement de la cavité permet de réaliser une cavité d'une longueur de 9,5 m. On obtient des impulsions femtosecondes à une cadence de 15,8 MHz.

Les figures 5 et 6 montrent le spectre et l'autocorrélation respectivement. Sur la Figure 5, l'axe des abscisses 29 représente la longueur d'onde (en nm) et l'axe des ordonnées 30 représente l'intensité mesurée. Sur la Figure 6, l'axe des abscisses 31 représente l'auto-corrélation normalisée (en ps) de l'impulsion dans le temps donnant la durée des impulsions et l'axe des ordonnées 32 représente l'énergie d'impulsion. La largeur spectrale est de 4,6 nm et la durée des impulsions est de 250 fs. La puissance moyenne est de 2 W correspondant à une énergie d'impulsion de 120 nJ.

La présente invention peut avantageusement être mise en oeuvre avec une énergie par impulsion supérieure à 100 nJ en régime sub-picoseconde pour répondre à des besoins traditionnellement couverts par des systèmes de beaucoup plus forte énergie. Cette énergie par impulsion est notamment suffisante pour obtenir un effet d'ablation laser ou de modification de la structure interne des matériaux à traiter, par exemple dans les domaines suivants:

- marquage interne de matériaux transparents,
- changement d'indice de réfraction, par exemple pour la réalisation de guide d'ondes,
- micro- et nano-texturage,
- prototypage rapide par la création de micro-objets.
- chirurgie oculaire réfractive
- micro-usinage.

## Revendications

**1.** Source laser ultrabrève à ions terre rare comportant d'une part une cavité résonante (1) ayant une première face de sortie (2) partiellement réfléchissante et une deuxième face réfléchissante (3), et d'autre part un premier matériau actif (4), placé à l'intérieur de la cavité résonante, ayant une fluence de saturation supérieure à 3 J/cm$^2$ et recevant un flux lumineux de pompe (5), ledit flux étant émis par une première source de pompe laser solide (7), ladite source laser ultrabrève émettant des impulsions lumineuses ayant une énergie $E_L$, ladite cavité résonante (1) présentant une longueur de chemin optique parcourue par lesdites impulsions supérieure à 7,5 m de sorte que l'énergie $E_L$ par impulsion soit supérieure à 100 nJ, ledit chemin optique comprenant au moins un passage dans ledit matériau actif (4),
**caractérisée en ce que** :

- la source laser ultrabrève comprend des moyens pour allonger la cavité résonante (1) permettant d'étendre la longueur du chemin optique parcouru par lesdites impulsions lumineuses dans la cavité résonante (1) d'une source laser compacte, la matrice ABCD de propagation de ladite cavité résonante (1) étant proche de la matrice unitaire de sorte que les caractéristiques du faisceau lumineux effectuant des allers-retours dans la cavité résonante (1) sont inchangées, lesdits moyens pour allonger la cavité comprenant au moins un dispositif d'allongement de la cavité (8) comportant à une première extrémité un premier miroir plan (9) et à l'autre extrémité un deuxième miroir plan (10), lesdits premier et deuxième miroirs plans (9, 10) étant placés respectivement au foyer d'un premier et deuxième miroirs sphériques concaves (11, 12), ledit premier miroir d'entrée plan (9) étant placé en avant et espacé du premier miroir sphérique (11) et permettant l'injection et l'éjection des impulsions lumineuses dans le dispositif d'allongement de la cavité, ledit deuxième miroir plan (10) ayant un axe normal à sa surface incliné verticalement d'un angle (90° - θ/n) par rapport à un plan parallèle au plan contenant le premier miroir plan (9) de sorte qu'une impulsion lumineuse entrant dans ledit dispositif (8) sous un angle d'incidence θ dans un plan vertical et sous un angle Φ dans un plan horizontal, par rapport à la normale à la surface du premier miroir plan (9) soit réfléchie successivement par l'un des miroirs plans (9, 10), les miroirs sphériques (11, 12) et puis par l'autre des miroirs plans (9, 10) de manière qu'elle subisse 2*n réflexions sur le deuxième miroir sphérique (12) avant de sortir dudit dispositif.

**2.** Source laser ultrabrève selon la revendication 1, **caractérisée en ce que** la longueur de chemin optique est comprise entre 7,5 m et 300 m.

**3.** Source laser ultrabrève selon l'une quelconque des revendications 1 à 2, **caractérisée en ce que** la source laser comprend au moins un deuxième matériau actif (5) placé à l'intérieur de la cavité résonante (1), ledit deuxième matériau (5) actif recevant un flux lumineux de pompe (14).

**4.** Source laser ultrabrève selon la revendication 3, **caractérisée en ce que** ledit flux lumineux de pompe (14) est émis par une deuxième source de pompe laser solide (15).

**5.** Source laser ultrabrève selon l'une quelconque des revendications 1 à 4, **caractérisée en ce que** le nombre de passage par allers-retours dans la cavité résonante dans chaque matériau actif (4,5) est supérieur ou égal à 2.

**6.** Source laser ultrabrève selon la revendication 5, **caractérisée en ce que** le nombre de passage par allers-retours dans la cavité résonante dans chaque matériau actif (4, 5) est égal à 4.

**7.** Source laser ultrabrève selon la revendication 5 ou 6, **caractérisée en ce qu'**elle comprend un miroir dichroïque (13) placé entre ledit matériau actif (4, 5) et la source de pompe laser solide correspondante (7, 15), ledit miroir recevant les impulsions lumineuses dudit matériau actif (4, 5) et réfléchissant lesdites impulsions lumineuses vers le matériau actif (4, 5).

**8.** Source laser ultrabrève selon l'une quelconque des revendications 1 à 7, **caractérisée en ce que** la source de pompe laser solide (15) est un laser semi-conducteur.

**9.** Source laser ultrabrève selon l'une quelconque des revendications 1 à 8, **caractérisée en ce que** ledit matériau actif (4, 5) comprend des ions Ytterbium.

**10.** Source laser ultrabrève selon l'une quelconque des revendications 1 à 9, **caractérisée en ce que** ledit matériau actif (4, 5) comprend des ions Néodyme.

**11.** Dispositif d'allongement (8) d'une cavité laser, ledit dispositif comprenant deux miroirs plans (9, 10) placés aux foyers respectifs de deux miroirs sphériques concaves (11, 12),
**caractérisé en ce que** :

un premier miroir plan (9) est disposé à une première extrémité dudit dispositif (8) et un deuxième miroir plan (10) étant à l'autre extrémité de ce dispositif (8), ledit premier miroir d'entrée plan (9) étant placé en avant et espacé du premier miroir sphérique (11) et permettant l'injection et l'éjection d'impulsions lumineuses dans le dispositif d'allongement (8), ledit deuxième miroir plan (10) ayant un axe normal à sa surface incliné verticalement d'un angle (90° - $\theta$/n) par rapport à un plan parallèle au plan contenant le premier miroir plan (9), de sorte qu'une impulsion lumineuse entrant dans ledit dispositif (8) sous un angle d'incidence $\theta$ dans un plan vertical et sous un angle $\Phi$ dans un plan horizontal, par rapport à la normale à la surface du premier miroir plan (9) soit réfléchie successivement par l'un des miroirs plans (9, 10), les miroirs sphériques (11, 12) et puis par l'autre des miroirs plans (9, 10) de manière qu'elle subisse 2*n réflexions sur le deuxième miroir sphérique (12) avant de sortir dudit dispositif (8).

**Claims**

**1.** Ultra-short laser source with rare earth ions comprising on the one hand a resonant cavity (1) having a first output face (2) partially reflecting and a second reflecting face (3), and on the other hand a first active material (4), placed inside the resonant cavity, having a saturation fluency greater than 3 J/cm² and receiving a pump luminous flux (5), said flux being transmitted by a first solid laser pump source (7), said ultra-short laser source transmitting luminous pulses having an energy $E_L$, said resonant cavity (1) exhibiting an optical path length travelled by said pulses greater than 7,5 m so that the energy $E_L$ per pulse is greater than 100 nJ, said optical path including at least one path in said active material (4),
**characterised in that** :

- the ultra-short laser source comprises means for lengthening the resonant cavity (1) enabling to extend the optical path length travelled by said luminous pulses in the resonant cavity (1) of a compact laser source, the ABCD propagation matrix of said resonant cavity (1) being close to the unit matrix so that the features of the luminous beam completing round-trips in the resonant cavity (1) remain unchanged, said means for lengthening the cavity comprising at least one device for lengthening the cavity (8) comprising at a first end a first plane mirror (9) and at the other end a second plane mirror (10), said first and second plane mirrors (9, 10) being placed respectively at the focus of a first and second concave spherical mirrors (11, 12), said first input plane mirror (9) being placed in front of and spaced apart from said first spherical mirror (11) and enabling injection and ejection of luminous pulses in the device for lengthening the cavity, said second plane mirror (10) having an axis normal to its surface tilted vertically by an angle ($90°-\theta/n$) with respect to a plane parallel to the plane containing the first plane mirror (9) so that a luminous pulse entering said device (8) under an angle of incidence $\theta$ in a vertical plane and under an angle $\Phi$ in a horizontal plane, with respect to the normal to the surface of the first plane mirror (9) is reflected successively by one of the plane mirrors (9, 10), the spherical mirrors (11, 12) and then by the other one of plane mirrors (9, 10) so that it is subjected to $2*n$ reflections on the second spherical mirror (12) before exiting said device.

2. Ultra-short laser source according to claim 1, **characterised in that** the optical path length ranges between 7.5 m and 300 m.

3. Ultra-short laser source according to any of claims 1 to 2, **characterised in that** the laser source comprises at least one second active material (5) placed inside the resonant cavity (1), said second active material (5) receiving a pump luminous flux (14).

4. Ultra-short laser source according to claim 3, **characterised in that** said pump luminous flux (14) is transmitted by a second solid laser pump source (15).

5. Ultra-short laser source according to any of claims 1 to 4, **characterised in that** the number of paths per round-trips in the resonant cavity in each active material (4, 5) is greater than or equal to 2.

6. Ultra-short laser source according to claim 5, **characterised in that** the number of paths per round-trips in the resonant cavity in each active material (4, 5) is equal to 4.

7. Ultra-short laser source according to claim 5 or 6, **characterised in that** it comprises a dichroic mirror (13) placed between said active material (4, 5) and the corresponding solid laser pump source (7, 15), said mirror receiving the luminous pulses from said active material (4, 5) and reflecting said luminous pulses toward the active material (4, 5).

8. Ultra-short laser source according to any of claims 1 to 7, **characterised in that** the solid laser pump source (15) is a semiconductor laser.

9. Ultra-short laser source according to any of claims 1 to 8, **characterised in that** said active material (4, 5) comprises ytterbium ions.

10. Ultra-short laser source according to any of claims 1 to 9, **characterised in that** said active material (4, 5) comprises neodymium ions.

11. Lengthening device (8) of a laser cavity, said device comprising two plane mirrors (9, 10) placed at the respective focus of two concave spherical mirrors (11, 12),
**characterised in that**:

a first plane mirror (9) is placed at a first end of said device (8) and a second plane mirror (10) being placed at the other end of said device (8), said first input plane mirror (9) being placed in front of and spaced apart from said first spherical mirror (11) and enabling injection and ejection of luminous pulses in the lengthening device (8), said second plane mirror (10) having an axis normal to its surface tilted vertically by an angle ($90°-\theta/n$) with respect to a plane parallel to the plane containing the first plane mirror (9), so that a luminous pulse entering said device (8) under an angle of incidence $\theta$ in a vertical plane and under an angle $\Phi$ in a horizontal plane, with respect to the normal to the surface of the first plane mirror (9) is reflected successively by one of the plane mirrors (9, 10), the spherical mirrors (11, 12) and then by the other one of plane mirrors (9, 10) so that it is subjected to $2*n$ reflections on the second spherical mirror (12) before exiting said device (8).

**Patentansprüche**

1. Ultrakurzpuls-Laserquelle mit Seltenerd-Ionen, die einerseits einen Resonanzraum (1), der eine erste Austrittsfläche (2), die teilweise reflektierend ist, und eine zweite reflektierende Fläche (3) aufweist, und andererseits ein erstes aktives Material (4) umfasst, das innerhalb des Resonanzraums untergebracht ist, eine Sättigungsfluenz aufweist, die höher ist als 3 J/cm$^2$ und einen Pumplichtstrom (5) empfängt, wobei der Strom durch eine erste Festkörperlaser-Pumpquelle (7) ausgesendet wird, wobei die Ultrakurzpuls-Laserquelle Lichtimpulse aussendet, die eine Energie $E_L$ aufweisen, wobei der Resonanzraum (1) eine optische Weglänge aufweist, die von den Impulsen zurückgelegt wird, die größer als 7,5 m ist, derart, dass die Energie $E_L$ pro Impuls höher ist als 100 nJ, wobei der optische Weg mindestens einen Durchgang in dem aktiven Material (4) umfasst,
**dadurch gekennzeichnet, dass**:

   - die Ultrakurzpuls-Laserquelle Mittel zum Ausdehnen des Resonanzraums (1) umfasst, die das Verlängern der Länge des durch die Lichtimpulse zurückgelegten optischen Wegs im Resonanzraum (1) einer kompakten Laserquelle ermöglichen, wobei die Ausbreitungsmatrix ABCD des Resonanzraums (1) nahe der unitären Matrix ist, derart, dass die Merkmale des im Resonanzraum (1) Hin- und Rückwege zurücklegenden Lichtbündels unverändert bleiben, wobei die Mittel zum Ausdehnen des Raums mindestens eine Einrichtung zur Ausdehnung des Raums (8) umfassen, die an einem ersten Ende einen ersten Planspiegel (9) und am anderen Ende einen zweiten Planspiegel (10) umfassen, wobei der erste und der zweite Planspiegel (9, 10) im Brennpunkt eines ersten beziehungsweise zweiten konkaven Kugelspiegels (11, 12) untergebracht sind, wobei der erste Eingangsplanspiegel (9) vorne untergebracht ist und vom ersten Kugelspiegel (11) beabstandet ist und das Einführen und das Herausführen von Lichtimpulsen in der Einrichtung zur Ausdehnung des Raums ermöglicht, wobei der zweite Planspiegel (10) eine Achse normal zu seiner Fläche aufweist, die vertikal in einem Winkel (90° - θ/n) in Bezug auf eine Ebene geneigt ist, die parallel zur Ebene ist, die den ersten Planspiegel (9) enthält, derart, dass ein Lichtimpuls, der in einem Einfallswinkel θ in einer vertikalen Ebene und in einem Winkel φ in einer horizontalen Ebene in Bezug auf die Normale zur Fläche des ersten Planspiegels (9) in die Einrichtung (8) eintritt, nacheinander durch einen der Planspiegel (9, 10), die Kugelspiegel (11, 12) und dann durch den anderen der Planspiegel (9, 10) reflektiert wird, derart, dass er auf dem zweiten Kugelspiegel (12) 2*n Reflexionen erfährt, bevor er aus der Einrichtung austritt.

2. Ultrakurzpuls-Laserquelle nach Anspruch 1, **dadurch gekennzeichnet, dass** die optische Weglänge zwischen 7,5 m und 300 m enthalten ist.

3. Ultrakurzpuls-Laserquelle nach einem der Ansprüche 1 bis 2, **dadurch gekennzeichnet, dass** die Laserquelle mindestens ein zweites aktives Material (5) umfasst, das innerhalb des Resonanzraums (1) untergebracht ist, wobei das zweite aktive Material (5) einen Pumplichtstrom (14) empfängt.

4. Ultrakurzpuls-Laserquelle nach Anspruch 3, **dadurch gekennzeichnet, dass** der Pumplichtstrom (14) durch eine zweite Festkörper-Laserquelle (15) ausgesendet wird.

5. Ultrakurzpuls-Laserquelle nach einem der Ansprüche 1 bis 4, **dadurch gekennzeichnet, dass** die Durchgangsanzahl durch Hin- und Rückwege im Resonanzraum in jedem aktiven Material (4, 5) größer oder gleich 2 ist.

6. Ultrakurzpuls-Laserquelle nach Anspruch 5, **dadurch gekennzeichnet, dass** die Durchgangsanzahl durch Hin- und Rückwege im Resonanzraum in jedem aktiven Material (4, 5) gleich 4 ist.

7. Ultrakurzpuls-laserquelle nach Anspruch 5 oder 6, **dadurch gekennzeichnet, dass** sie einen dichröitischen Spiegel (13) umfasst; der zwischen dem aktiven Material (4, 5) und der entsprechenden Festkörperlaser-Pumpquelle (7, 15) untergebracht ist, wobei der Spiegel die Lichtimpulse des aktiven Materials (4, 5) empfängt und die Lichtimpulse zum aktiven Material (4, 5) reflektiert.

8. Ultrakurzpuls-Laserquelle nach einem der Ansprüche 1 bis 7, **dadurch gekennzeichnet, dass** die Festkörperlaser-Pumpquelle (15) ein Halbleiterlaser ist.

9. Ultrakurzpuls-Laserquelle nach einem der Ansprüche 1 bis 8, **dadurch gekennzeichnet, dass** das aktive Material (4, 5) Ytterbium-Ionen umfasst.

10. Ultrakurzpuls-Laserquelle nach einem der Ansprüche 1 bis 9, **dadurch gekennzeichnet, dass** das aktive Material

(4, 5) Neodym-Ionen umfasst.

11. Einrichtung zur Ausdehnung (8) eines Laserresonators, wobei die Einrichtung zwei Planspiegel (9, 10) umfasst, die in entsprechenden Brennpunkten von zwei konkaven Kugelspiegeln (11, 12) untergebracht sind,
**dadurch gekennzeichnet, dass**:

ein erster Planspiegel (9) an einem ersten Ende der Einrichtung (8) angeordnet ist und ein zweiter Planspiegel (10) sich am anderen Ende dieser Einrichtung (8) befindet, wobei der erste Eingangsplanspiegel (9) vorne untergebracht ist und vom ersten Kugelspiegel (11) beabstandet ist und das Einführen und das Herausführen von Lichtimpulsen in der Ausdehnungseinrichtung (8) ermöglicht, wobei der zweite Planspiegel (10) eine Achse normal zu seiner Fläche aufweist, die vertikal in einem Winkel $(90° - \theta/n)$ in Bezug auf eine Ebene geneigt ist, die parallel zur Ebene ist, die den ersten Planspiegel (9) enthält, derart, dass ein Lichtimpuls, der in einem Einfallswinkel $\theta$ in einer vertikalen Ebene und in einem Winkel $\phi$ in einer horizontalen Ebene in Bezug auf die Normale zur Fläche des ersten Planspiegels (9) in die Einrichtung (8) eintritt, nacheinander durch einem der Planspiegel (9, 10), die Kugelspiegel (11, 12) und dann durch den anderen der Planspiegel (9, 10) reflektiert wird, derart, dass er auf dem zweiten Kugelspiegel (12) 2*n Reflexionen erfährt, bevor er aus der Einrichtung (8) austritt.

FIGURE 1

## FIGURE 2

FIGURE 3

FIGURE 4

**FIGURE 5**

**FIGURE 6**

## RÉFÉRENCES CITÉES DANS LA DESCRIPTION

**Documents brevets cités dans la description**

- WO 0221643 A

**Littérature non-brevet citée dans la description**

- **Ippen ; Shank.** *Appl. Phys. Letters,* 1974, vol. 24, 373
- **Prasankumar et al.** *Optics Express,* 02 Juin 2003, vol. 11 (11), 1265-1269
- **Kolev et al.** *Optics Lett.,* 15 Juillet 2003, vol. 28 (14), 1275-1277
- **Papadopoulos et al.** *Optics Lett.,* 01 Octobre 2003, vol. 28 (19), 1838-1840
- **H. Kogelnik ; T. Li.** Laser Beams and Resonators. *Applied Optics,* Octobre 1966, vol. 5 (10
- **Clemens Hoenninger.** Ultrafast Ytterbium-Doped Bulk Lasers and Laser Amplifiers. Hartung-Gorre Verlag, 1998